# EUROPEAN PATENT SPECIFICATION

(11) **EP 4 198 328 B1**
(45) Date of publication and mention of the grant of the patent: **04.09.2024**
(21) Application number: 21215944.6
(22) Date of filing: 20.12.2021
(51) Int. Cl.: F16C 17/10, F16C 23/04, F16C 33/12, F16C 33/10, F16C 17/02

(54) **PLAIN BEARING, NOTABLY FOR AEROSPACE APPLICATIONS, HAVING IMPROVED WEAR RESISTANCE**
GLEITLAGER, INSBESONDERE FÜR LUFT- UND RAUMFAHRTANWENDUNGEN MIT VERBESSERTER VERSCHLEISSFESTIGKEIT
PALIER LISSE, NOTAMMENT POUR DES APPLICATIONS AÉROSPATIALES, PRÉSENTANT UNE MEILLEURE RÉSISTANCE À L'USURE

(43) Date of publication of application: 21.06.2023
(73) Proprietor: Aktiebolaget SKF, 415 50 Göteborg (SE)
(72) Inventor: Dzwonczyk, Joanna Stefania, 3401AV Ijsselstein (NL); Dennis, Grant James, Pontypridd CF38 2DD (GB); Colton, Michael Brett, Bristol BS7 0HQ (GB)
(74) Representative: Schonecke, Mitja

(56) References cited:
- EP-A1- 2 963 304
- DE-A1- 102018 217 760
- DE-A1- 3 128 412
- JP-B2- 5 934 972
- US-A1- 2021 310 367

## Description

The present invention generally relates to plain bearings and more precisely, to improved wear resistance of plain bearings particularly suitable for aerospace applications. Such a bearing is for example known from JP 5 934972 B2.

Typically, in self-lubricating plain bearings, hard materials such as steel, or hard coatings such as ceramics, are used coupled with a self-lubricating material. The combination results in an optimised wear and friction resistance at the interface between the inner ring and the outer ring of the plain bearing.

The self-lubricating material usually consists in a liner and is considered as a consumable material, whereas the opposing counter-surface is optimised to have none or very low wear.

In order to comply with weight reduction requirement in aerospace industry, heavy materials of plain bearings such as steel have been substituted by light alloys.

Light alloys, however, have poor tribology properties, especially when used against a composite self-lubricating liner. For example, under very low loads, aluminum alloy exhibits abrasive wear after very few oscillating cycles.

It is known to apply hard coatings by surface treatment method such as Physical Vapor Deposition (PVD) or High Velocity Oxy Fuel (HVOF) to enhance the lifetime of plain bearings made of steel, but also light alloys such as titanium.

Nevertheless, coatings obtained by HVOF or PVD techniques cannot be applied to certain light alloys as a substrate, such as aluminum, since the high process temperatures of these methods would lead to overaging the material and lead to a reduction on mechanical properties.

PVD and HVOF techniques being not suitable for aluminum light alloys, it is possible to form an electrochemically produced layer of aluminum oxide on the surface of aluminum alloy by hard anodising method. The resulting coating enables to improve the resistance to wear of the aluminum alloy.

The downside of this solution is that the wear resistance of the coated aluminum alloy remains low as compared with coated steels.

Consequently, the present invention intends to overcome these disadvantages by providing a plain bearing suitable for aerospace applications, having an improved wear resistance that can be obtained from light alloys such as aluminum having limited thermal resistance properties.

One object of the invention is to provide a plain bearing, notably for aerospace applications comprising an outer ring and an inner ring comprising respectively an inner surface and an outer surface intended to cooperate with each other for the relative movement of the outer and inner rings.

According to the invention, the inner ring and/or the outer ring is made of a metal matrix composite material.

According to the invention, the metal matrix composite material may comprise an aluminum alloy matrix.

According to the invention, the major alloying element of the aluminum matrix may be copper, zinc or a combination of magnesium and silicon.

According to the invention, the metal matrix composite material is reinforced with ceramic fillers.

According to an embodiment, the ceramic fillers comprise silicon carbide particles.

More preferably, the particle size of silicon carbide is comprised between 0.7µm and 3µm.

More preferably, the volume fraction of the silicon carbide fillers is comprised between 15% and 28%.

Advantageously, the plain bearing further comprises a self-lubricating liner interposed between the inner surface of the outer ring and the outer surface of the inner ring. In this case, the plain bearing is a self-lubricating plain bearing.

Advantageously, the liner comprises a phenolic resin matrix filled with glass fibers.

According to the invention, the plain bearing is a spherical plain bearing.

The inner surface of the outer ring is concave and the outer surface of the inner ring is convex.

Other advantages and features of the invention will appear from the detailed description of embodiment of the invention, which are nonlimiting example, illustrated on the appended drawing of which:

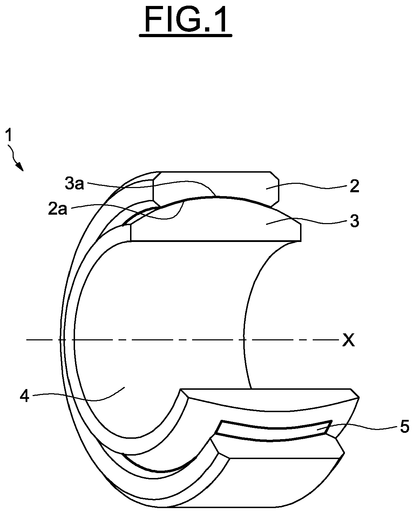

[Fig 1] illustrates a spherical plain bearing according to an embodiment of the invention.

Referring to Figure 1, a spherical plain bearing 1 of main axis X comprises an outer ring 2 concentrically positioned with respect to an inner ring 3. The exemplified plain bearing 1 is a lightweight plain bearing for aerospace applications.

The outer ring 2 has a concave bore or inner surface 2a of spherical shape, and the inner ring 3 has a convex outer surface 3a of spherical shape. The inner ring 3 also comprises a cylindrical bore 4.

The inner and outer surfaces 2a, 3a are facing each other and are of corresponding shapes to permit a relative motion between them the outer ring 2 and the inner ring 3.

The plain bearing 1 is a self-lubricating plain bearing. The plain bearing 1 comprises a self-lubricating liner 5 radially interposed between the inner surface 2a of the outer ring 2 and the outer surface 3a of the inner ring 3. The self-lubricating liner 5 reduces friction and permits a reduced wear rate during the service life of the plain bearing 1.

The liner 5 may be in form of a sheet and attached to one of the inner surface 2a of the outer ring 2 or the outer surface 3a of the inner ring 3.

In the illustrated example, the liner 5 is fixed to the inner surface 2a of the outer ring 2 and has a sliding contact surface facing the outer surface 3a of the inner ring 3. The outer ring 3 radially comes into contact against the inner ring 2 by interposition of the liner 5.

The liner 5 may comprise a composite material, for example a phenolic resin matrix filled with glass fibers.

The liner 5 may also comprise a polyurethane resin, for example a F160^{®} resin.

Furthermore, the inner ring 3 comprises a metal matrix composite material.

In another embodiment, the plain bearing 1 may include an outer ring 2 or a combination of an inner ring 3 and an outer ring 2 comprising a metal matrix composite material.

The metal matrix composite material comprises an aluminum alloy matrix.

The major alloying element of the aluminum matrix is copper, or zinc, or a combination of magnesium and silicon. In particular, the aluminum-based alloys from 2/6/7xxx series may be selected.

The aluminum alloy matrix can be, for example, AA2124 alloy.

Aluminum alloys are light alloys particularly suitable for aerospace applications.

In another embodiment, the inner ring 3 and/or the outer ring 2 can be made in a different light alloy matrix such as, for example, titanium alloy or magnesium alloy.

The illustrated outer ring 2 is made of aluminum alloy. An example of aluminum alloy is AA2124 alloy.

The metal matrix composite material is reinforced with ceramic fillers, for example with silicon carbide particles.

Preferably, the particle size of silicon carbide is comprised between 0.7µm and 3µm and the volume fraction of the silicon carbide fillers is comprised between 15% and 28%.

The aluminum alloy matrix composite can be, for example, AMC225XE material incorporating a volume fraction of 25% of silicon carbide.

The incorporation of hard ceramic fillers in the aluminum alloy matrix increases the macro surface hardness of the aluminum alloy matrix. As a result, the inner ring 3 made of silicon carbide particles exhibits a greater resistance to wear.

Besides, the presence of ceramic fillers leads to improve the wear resistance of the inner ring 3 subjected to friction against the hard sliding contact surface of the liner 5 which may include hard fillers particles such as glass fibers.

Therefore, the resulting self-lubricating plain bearing 1 exhibits a better mechanical resistance, an improved wear properties of the self-lubricating liner 5 and, consequently, an extended service life.

In particular, the inner ring 3 comprising ceramic fillers in an aluminum alloy matrix shows a significantly better hardness and resistance to wear than uncoated aluminum alloy such as, for example, AA7075 aluminum alloy. It was also found that such an inner ring 3 gives a greater resistance to wear than steel-based plain bearings.

This permits the use of lightweight materials without the need for an additional manufacturing step to apply a coating. Consequently, the cost of manufacturing the plain bearing is reduced compared with alternative coated solutions.

The use of a metal matrix composite material makes it possible to manufacture a lightweight plain bearing based on light alloy suitable for aerospace with a service life at least equal to a plain bearing based on steel.

According to an embodiment, a coating can be applied, in addition, on the inner surface 2a of the outer ring 2 or on the outer surface 3a of the inner ring 3 in order to further improve friction, wear or corrosion resistance of the ring to which the coating is applied.

In the illustrated example, the plain bearing is a self-lubricating plain bearing provided with the liner. Alternatively, the plain bearing may not be provided with the liner. In this case, the outer ring 2 radially comes into direct contact against the inner ring 3.

In the illustrated example, the plain bearing is a radial spherical plain bearing. Alternatively, the plain bearing may be an angular contact spherical plain bearing or a thrust spherical plain bearing.

## Claims

1. Plain bearing, notably for aerospace applications, comprising an outer ring (2) and an inner ring (3) comprising respectively a concave inner surface (2a) and a convex outer surface (3a) intended to cooperate with each other for the relative movement of the outer and inner rings (2, 3), **characterized in that** the inner ring (3) and/or the outer ring (2) is made of a metal matrix composite material reinforced with ceramic fillers, the metal matrix composite material comprising an aluminum alloy matrix, and the major alloying element of the aluminum matrix being copper, zinc or a combination of magnesium and silicon.

2. Plain bearing according to claim 1, wherein the ceramic fillers comprise silicon carbide particles.

3. Plain bearing according to claim 2, wherein the particle size of silicon carbide is comprised between 0.7µm and 3µm.

4. Plain bearing according to claim 2 or 3, wherein the volume fraction of the silicon carbide fillers is comprised between 15% and 28%.

5. Plain bearing according to any of preceding claims, further comprising a self-lubricating liner (5) interposed between the inner surface (2a) of the outer ring (2) and the outer surface (3a) of the inner ring (3).

6. Plain bearing according to claim 5, wherein the liner (5) comprises a phenolic resin matrix filled with glass fibers.

## Patentansprüche

1. Gleitlager, insbesondere für Luft- und Raumfahrtanwendungen, umfassend einen Außenring (2) und einen Innenring (3), die jeweils eine konkave Innenfläche (2a) und eine konvexe Außenfläche (3a) umfassen, die vorgesehen sind, für die relative Bewegung des Außenrings und des Innenrings (2, 3) miteinander zusammenzuwirken, **dadurch gekennzeichnet, dass** der Innenring (3) und/oder der Außenring (2) aus einem Metallmatrix-Verbundmaterial hergestellt ist, das mit keramischen Füllstoffen verstärkt ist, wobei das Metallmatrix-Verbundmaterial eine Aluminiumlegierungsmatrix umfasst und das Hauptlegierungselement der Aluminiummatrix Kupfer, Zink oder eine Kombination aus Magnesium und Silizium ist.

2. Gleitlager nach Anspruch 1, wobei die keramischen Füllstoffe Siliziumkarbidpartikel umfassen.

3. Gleitlager nach Anspruch 2, wobei die Partikelgröße von Siliziumkarbid zwischen 0,7 µm und 3 µm umfasst.

4. Gleitlager nach Anspruch 2 oder 3, wobei der Volumenanteil der Siliziumkarbidfüllstoffe zwischen 15 % und 28 % umfasst.

5. Gleitlager nach einem der vorhergehenden Ansprüche, weiterhin umfassend eine selbstschmierende Auskleidung (5), die zwischen der Innenfläche (2a) des Außenrings (2) und der Außenfläche (3a) des Innenrings (3) angeordnet ist.

6. Gleitlager nach Anspruch 5, wobei die Auskleidung (5) eine Phenolharzmatrix umfasst, die mit Glasfasern gefüllt ist.

## Revendications

1. Palier lisse, notamment pour des applications aérospatiales, comprenant une bague externe (2) et une bague interne (3) comprenant respectivement une surface interne concave (2a) et une surface externe convexe (3a) destinées à coopérer l'une avec l'autre pour le déplacement relatif des bagues externe et interne (2, 3), **caractérisé en ce que** la bague interne (3) et/ou la bague externe (2) sont constituées d'un matériau composite à matrice métallique renforcé de charges céramiques, le matériau composite à matrice métallique comprenant une matrice d'alliage d'aluminium, et l'élément d'alliage principal de la matrice à base d'aluminium étant le cuivre, le zinc ou une combinaison de magnésium et de silicium.

2. Palier lisse selon la revendication 1, dans lequel les charges céramiques comprennent des particules de carbure de silicium.

3. Palier lisse selon la revendication 2, dans lequel la taille des particules de carbure de silicium est comprise entre 0,7 µm et 3 um.

4. Palier lisse selon la revendication 2 ou 3, dans lequel la fraction volumique des charges de carbure de silicium est comprise entre 15 % et 28 %.

5. Palier lisse selon l'une quelconque des revendications précédentes, comprenant en outre un coussinet autolubrifiant (5) intercalé entre la surface interne (2a) de la bague externe (2) et la surface externe (3a) de la bague interne (3).

6. Palier lisse selon la revendication 5, dans lequel le coussinet (5) comprend une matrice de résine phénolique chargée de fibres de verre.
